# EUROPÄISCHE PATENTSCHRIFT

(11) **EP 4 341 661 B1**
(45) Veröffentlichungstag und Bekanntmachung des Hinweises auf die Patenterteilung: **22.10.2025**
(21) Anmeldenummer: 22725366.3
(22) Anmeldetag: 27.04.2022
(51) Int. Cl.: G01M 13/021, G01M 13/028

(54) **PRÜFVORRICHTUNG ZUR PRÜFUNG VON ZAHNRÄDERN**
TESTING DEVICE FOR TESTING GEARS
DISPOSITIF DE TEST POUR TESTER DES PIGNONS

(30) Priorität: 20.05.2021 CN 202110551974; 15.07.2021 DE 102021003690
(43) Veröffentlichungstag der Anmeldung: 27.03.2024
(73) Patentinhaber: SEW-EURODRIVE GmbH & Co. KG, 76646 Bruchsal (DE)
(72) Erfinder: QIONGHUA, Gao, Tianjin (CN)
(86) Internationale Anmeldenummer: PCT/EP2022/025191
(87) Internationale Veröffentlichungsnummer: WO 2022/242906

(56) Entgegenhaltungen:
- CN-A- 106 124 193
- CN-A- 110 375 986
- US-A- 4 550 604
- US-A1- 2002 129 647

## Beschreibung

Die Erfindung betrifft eine Prüfvorrichtung zur Prüfung von Zahnrädern.

Es ist allgemein bekannt, dass zur Qualitätssicherung von hergestellten Produkten diese Produkte vor Auslieferung oder sonstiger weiteren Verwendung prüfbar sind.

**Aus der** DE 20 2004 003 620 U1 **ist eine Prüfvorrichtung für Zahnräder bekannt.**

**Aus der** DE 26 27 751 A1 **ist eine Einrichtung zur Ermittlung von Sammelfehlern an Zahnrädern bekannt.**

**Aus der** EP 2 283 958 A1 **ist ein Verfahren zum Glätten von Zahnrädern bekannt.**

**Aus der** DE 197 19 249 C1 **ist eine Vorrichtung zur Komplettvermessung von Getriebeverzahnungen einschließlich der Zahnflankentopografie bekannt.**

**Aus der** JP H06- 39 318 Y2 **ist ein Zahnradprüfverfahren bekannt.**

**Aus der** CN 1 11 707 467 A **ist eine Zahnradprüfmaschine bekannt.**

**Aus der** JP H09- 61 300 A **ist ein Verfahren zum Prüfen von miteinander kämmenden Zahnrädern bekannt.**

**Aus der** CN 110 375 986 A **ist als nächstliegender Stand der Technik eine Prüfvorrichtung bekannt.**

**Aus der** CN 106 124 193 A **ist ein Prüfungsverfahren bekannt.**

**Aus der** US 4 550 604 A **ist ein abnormaler Geräuschdetektor zur Zahnradprüfung bekannt.**

**Aus der** US 2002/129647 A1 **ist ein kontinuierliches Messverfahren zur Zahnradprüfung bekannt.**

Der Erfindung liegt daher die Aufgabe zugrunde, eine kostengünstige, schnelle und einfache Prüfung von Zahnrädern zu ermöglichen.

Erfindungsgemäß wird die Aufgabe bei der Prüfvorrichtung, insbesondere Prüfmaschine, nach den in Anspruch 1 angegebenen Merkmalen gelöst.

Wichtige Merkmale der Erfindung bei der Prüfvorrichtung, insbesondere Prüfmaschine, sind, dass die Prüfvorrichtung zur Prüfung von Zahnrädern vorgesehen sind, wobei die Prüfvorrichtung eine erste, drehbar gelagerte, von einem Elektromotor angetriebene Welle und zweite, drehbar gelagerte Wellen aufweist,
wobei die erste Welle parallel zu den zweiten Wellen ausgerichtet ist,
wobei die Prüfvorrichtung einen Sensor zur Detektion von Körperschall aufweist,
wobei ein erstes Zahnrad auf die erste Welle aufsteckbar ist und drehfest verbindbar ist,
wobei ein jeweiliges zweites Zahnrad auf die jeweilige zweite Welle aufsteckbar ist und drehfest mit der zweiten Welle verbindbar ist,
so, dass das erste Zahnrad mit dem jeweiligen zweiten Zahnrad im Eingriff ist.

Von Vorteil ist dabei, dass hergestellte Zahnräder vor dem Einbau in ein Getriebe prüfbar sind. Somit ist die Fertigungsqualität schnell, einfach und kostengünstig überprüfbar. Denn direkt nach dem Antreiben der Zahnräder entsteht Körperschall der im Eingriff sich befindenden Zahnräder, beispielsweise angeregt durch Eintrittstöße und Austrittstöße der Zähne der Verzahnungen der Zahnräder.

Bei einer vorteilhaften Ausgestaltung ist von einer jeweiligen Belastungseinrichtung einer jeweiligen zweiten Welle ein Bremsmoment zuleitbar, dessen Wert mittels einer Winkelstellung eines Hebelteils der Prüfvorrichtung einstellbar ist. Von Vorteil ist dabei, dass die Prüfung auch unter Belastung ausführbar ist. Außerdem ist bei Anlegen eines Bremsmoments eine Verringerung der durch Drehzahlschwankungen auslösbaren Klappergeräusche erreichbar, die durch ein Verzahnungsspiel verursachbar sind.

Bei einer vorteilhaften Ausgestaltung fungiert eine Grundplatte der Prüfvorrichtung als Lageraufnahme für Lager oder ist mit einer jeweiligen Lageraufnahme für jeweilige Lager verbunden,
wobei die jeweiligen Lager die jeweiligen Wellen lagern. Von Vorteil ist dabei, dass der Elektromotor unterhalb der Grundplatte und die Prüflinge oberhalb der Grundplatte anordenbar sind. Somit ist durch die Grundplatte eine Schallabschirmung erreichbar.

Bei einer vorteilhaften Ausgestaltung umgeben eine vorzugsweise optisch transparente Schutzabdeckung zusammen mit der Grundplatte die Wellen und den Sensor ein schalldichtes Gehäuse bildend. Von Vorteil ist dabei, dass ein möglichst gutes Signal-Rausch-Verhältnis erreichbar ist.

Bei einer vorteilhaften Ausgestaltung ist der Sensor an einer Lageraufnahme eines Lagers und/oder an einem Außenring eines Lagers der ersten Welle angebracht, insbesondere und/oder diese berührt. Von Vorteil ist dabei, dass ein möglichst gutes Signal-Rausch-Verhältnis erreichbar ist.

Bei einer vorteilhaften Ausgestaltung ist der Sensor mit einer Auswerteeinheit der Prüfvorrichtung elektrisch verbunden, welche geeignet zum Bestimmen eines Wertes eines Schallpegels oder einer Kurtosis des fouriertransformierten Sensorsignals, insbesondere des den vom Sensor detektierten Körperschall darstellenden Sensorsignals, ist und zum Überwachen des Wertes oder der Kurtosis auf Überschreitung eines Schwellwerts. Von Vorteil ist dabei, dass eine schnelle Prüfung durchführbar ist, da der Schall sofort erzeugt wird und bei Rissen oder sonstigen Fehlern diese im Sensorsignal einfache und schnell erkennbar sind.

Bei einer vorteilhaften Ausgestaltung weist die erste Welle eine Ausnehmung, insbesondere eine sacklochartige Ausnehmung, auf, wobei in die Ausnehmung ein erster axialer Bereich eines ersten Wellenteils einsteckbar ist und drehfest verbindbar ist mit der ersten Welle und ein erstes Zahnrad auf einen zweiten axialen Bereich des Wellenteils aufsteckbar und drehfest verbindbar ist,
wobei die jeweilige zweite Welle eine jeweilige Ausnehmung, insbesondere eine jeweilige sacklochartige Ausnehmung, aufweist, wobei in die jeweilige Ausnehmung ein erster axialer Bereich eines zweiten Wellenteils einsteckbar ist und drehfest verbindbar ist mit der jeweiligen zweiten Welle und ein zweites Zahnrad auf einen zweiten axialen Bereich des Wellenteils aufsteckbar und drehfest verbindbar ist,
so, dass das erste Zahnrad mit dem jeweiligen zweiten Zahnrad im Eingriff ist. Von Vorteil ist dabei, dass unterschiedlich große Zahnräder prüfbar sind.
**Erfindungsgemäß** weist jedes Wellenteil **oder** jede Welle jeweils einen Tag, insbesondere einen RFID-Tag oder einen NFC-Tag, auf und die Prüfvorrichtung weist ein Lesegerät auf, welches die innerhalb der Schutzabdeckung sich befindenden Tags ausliest, insbesondere zur Erkennung der Wellen und Wellenteile,
wobei das Lesegerät mit einem Rechner verbunden ist, der geeignet ist, den Verlauf des Sensorsignals in Abhängigkeit von einem zeitlichen Verlauf der Drehzahl der ersten Welle auf ein unzulässig hohes Maß an Abweichung von einem Sollverlauf zu überwachen. Von Vorteil ist dabei, dass die Drehzahl des Elektromotors vom Start des Prüflaufs an erhöht wird und dabei zu jedem Drehzahlwert ein vom Sensor erfasster Istwert an Körperschall mit einem zur entsprechenden Drehzahl im Speicher des Rechners hinterlegten Sollwert an Körperschall vergleichbar ist, so dass bei einem unzulässig hohen Maß an Abweichung des Istwertes vom Sollwert ein Warnsignal oder eine entsprechende Information anzeigbar ist. Da zu jedem Wellenteil ein jeweiliges Zahnrad und zu jeder Welle ein jeweiliges anderes Zahnrad zuordenbar ist, ist durch Auslesen der Tags bekannt, welche Zahnräder gerade Prüflinge sind. Somit ist zu jeder Zahnradkombination ein jeweiliger Sollverlauf, also drehzahlabhängiger Sollwert hinterlegbar und die jeweilige Kombination überprüfbar.

Bei einer vorteilhaften Ausgestaltung ist die Grundplatte aus einem schallabsorbierenden Material gefertigt,
insbesondere wobei das Material ein Schaumstoff ist und/oder einen Volumenanteil von Wolle, insbesondere Mineralwolle oder Baumwolle, aufweist, der größer als 10 % beträgt. Von Vorteil ist dabei, dass ein möglichst hohes Signal-Rausch-Verhältnis des Körperschallsignals erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

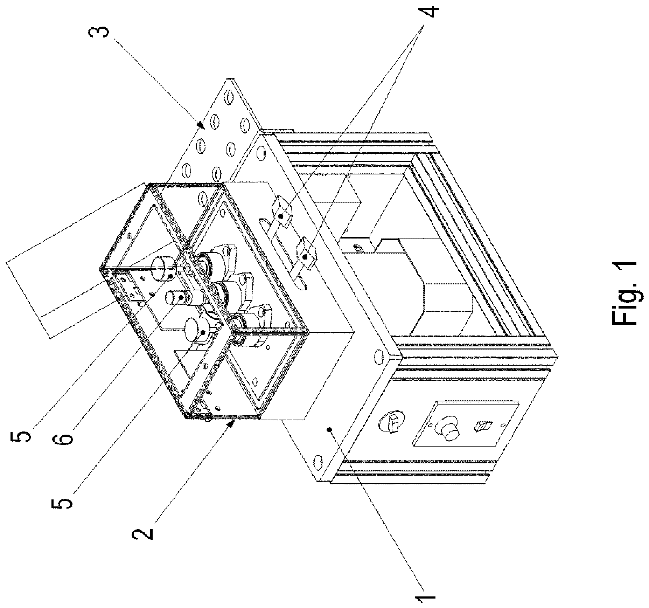

In der Figur 1 ist eine erfindungsgemäße Prüfvorrichtung mit Schutzabdeckung 2 und Aufnahme für zu prüfende Zahnräder in Schrägansicht gezeigt.

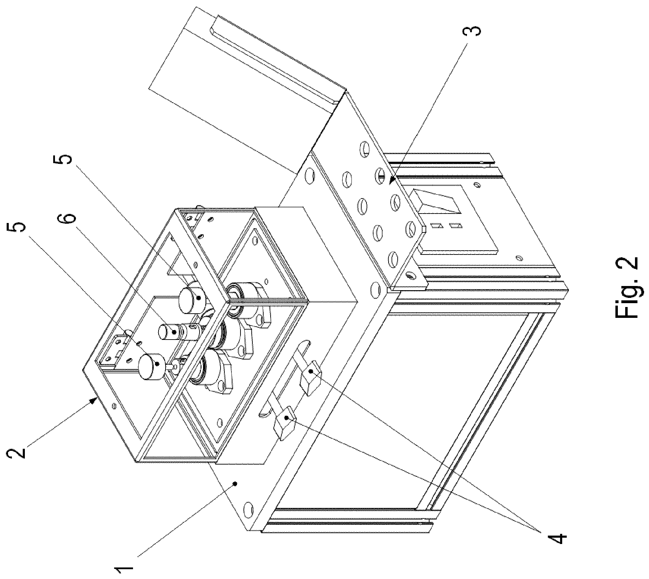

In der Figur 2 ist die Prüfvorrichtung aus einem anderen Blickwinkel gezeigt.

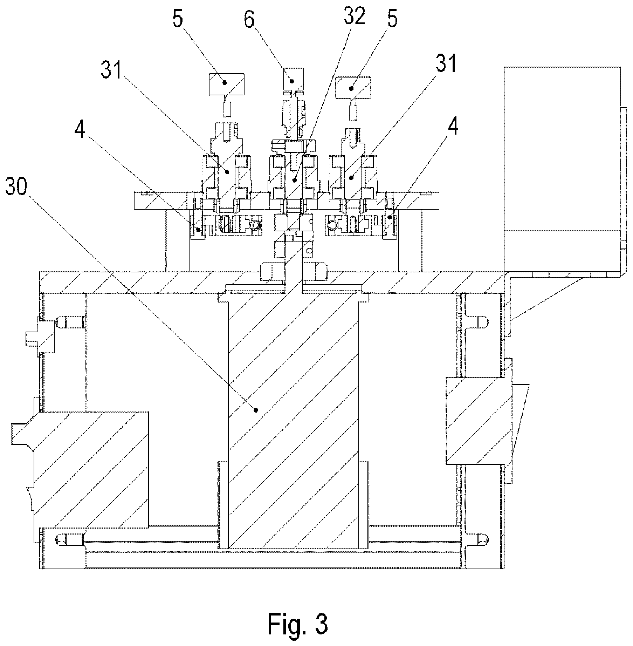

In der Figur 3 ist ein Querschnitt durch die Prüfmaschine dargestellt, insbesondere bei entfernter Schutzabdeckung 2.

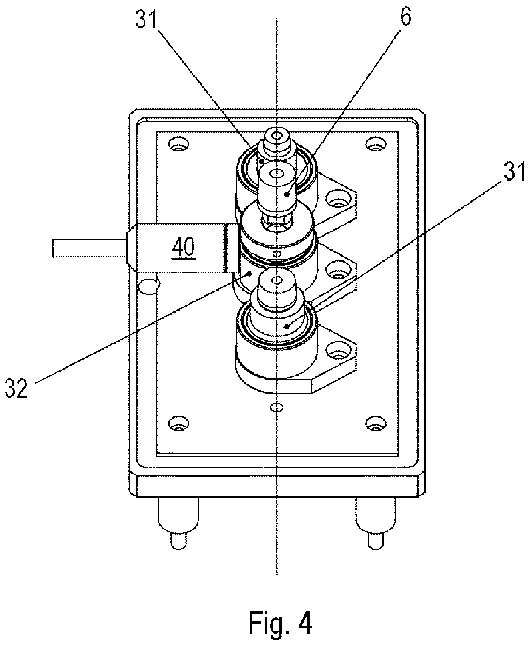

In der Figur 4 ist die Aufnahme in Schrägansicht dargestellt.

Wie in den Figuren gezeigt, weist die Prüfvorrichtung eine Aufnahme für zu prüfende Zahnräder auf, wobei eine vorzugsweise für Licht transparente Schutzabdeckung 2 die Aufnahme umgibt.

Die Aufnahme weist eine erste Welle 32 auf, die zwischen zwei zweiten Wellen 31 angeordnet ist, wobei die erste Welle 32 parallel zu den beiden zweiten Wellen 31 ausgerichtet ist.

Die erste Welle 32 ist von einem Elektromotor 30 angetrieben und die beiden zweiten Wellen 31 sind jeweils mit einer Belastungseinrichtung in Wirkverbindung. Jede der Belastungseinrichtungen bewirkt ein auf die jeweilige zweite Welle 31 eingeleitetes Bremsmoment, dessen Wert mittels eines Hebelteils 4 der Prüfvorrichtung einstellbar ist.

Ein gegebenenfalls als Prüfling verwendetes, antreibendes Zahnrad ist auf die erste Welle 32 aufsteckbar und dabei mit der ersten Welle 32 drehfest verbindbar.

Auf die zweiten Wellen 31 werden als Prüflinge weitere Zahnräder aufgesteckt und drehfest mit den zweiten Wellen 31 verbunden.

Ein Sensor ist mit der Prüfvorrichtung, insbesondere mit einer Lageraufnahme eines Lagers der ersten Welle 32 verbunden und detektiert den bei der Drehung der Zahnräder erzeugten Körperschall.

Die erste Welle 32 und die zweiten Wellen 31 weisen an ihrem axialen Endbereich eine sacklochartige Ausnehmung auf, in welche jeweilige Wellenteile (5, 6) mit ihrem ersten axialen Bereich einsteckbar sind und dabei drehfest verbindbar sind.

Ein zweiter jeweiliger Bereich der Wellenteile (5,6) weist einen größeren Durchmesser auf als der erste Bereich, so dass auf dem zweiten Bereich Zahnräder mit einer größeren Aufnahmebohrung auf die Wellenteile (5, 6) statt der Wellen (31, 32) aufsteckbar sind und somit prüfbar sind.

Das auf die erste Welle 32 aufgesteckte Zahnrad weist eine in axialer Richtung größere Breite auf als die auf den Wellenteilen (5, 6) oder direkt auf der jeweiligen Welle (31, 32) aufgesteckten Zahnräder. Somit ist gewährleistbar, dass das antreibende Zahnrad sicher und zuverlässig mit den anderen beiden Zahnrädern im Eingriff ist.

Der beim Drehbewegen der Zahnräder erzeugte Körperschall wird vom Sensor 40 detektiert und das Sensorsignal des Sensors 40 einer Auswerteeinheit zugeführt, die überwacht, ob in einem Frequenzbereich ein Schwellwert überschritten wird, und/oder die Kurtosis des fouriertransformierten Sensorsignals bestimmt und überwacht wird, ob ein Schwellwert überschritten wird.

Die Prüfvorrichtung weist eine Grundplatte 1 auf, die mit einer Vorratsplatte 3 verbunden ist, welche Ausnehmungen zur Aufnahme von Wellenteilen (5,6) aufweist, die das Prüfen von unterschiedlich großen Zahnrädern ermöglichten, indem sie auf in die Wellen (31, 32) einsteckbar und drehfest verbindbar sind, so dass sie die Aufnahme entsprechender Zahnräder ermöglichen. Bei Nicht-Verwendung der Wellenteile (5, 6) sind die Zahnräder dann direkt auf die Wellen (5,6) aufsteckbar und drehfest verbindbar, wobei die Wellenteile (31, 32) in den Ausnehmungen der Vorratsplatte 3 aufgenommen werden.

Sowohl die Wellenteile (5, 6) als auch die Wellen (31, 32) weisen Axialnuten auf, die zur Herstellung einer Passfederverbindung mit einem jeweiligen Zahnrad dienen.

Die Grundplatte 1 ist mit der Lageraufnahme für Lager verbunden oder fungiert als Lageraufnahme für Lager, mittels derer die Wellen (31, 32) gelagert sind.

Der Elektromotor 30 ist auf der von den Zahnrädern abgewandten Seite der Grundplatte 1 angeordnet, insbesondere also unterhalb der Grundplatte 1.

Die Schutzabdeckung 2 bildet zusammen mit der Grundplatte 1 ein im Wesentlichen schalldichtes Gehäuse. Somit beeinflussen Geräusche aus der Umgebung das Sensorsignal nur unerheblich.

Wenn eines der Zahnräder einen Riss aufweist, ist dies im bei Betrieb der Prüfvorrichtung schnell im Körperschallsignal erkennbar.

Die Grundplatte 1 ist aus einem schallabsorbierenden Material gefertigt, insbesondere wobei das Material ein Schaumstoff ist und/oder einen Volumenanteil von Wolle, insbesondere Mineralwolle oder Baumwolle, aufweist, der größer als 10 % beträgt.

### Bezugszeichenliste

1 Grundplatte
2 Schutzabdeckung
3 Vorratsplatte
4 Hebelteil
5 Wellenteil
6 Wellenteil
30 Elektromotor
31 Welle
32 Welle
40 Sensor, insbesondere Körperschallsensor

## Patentansprüche

1. Prüfvorrichtung zur Prüfung von Zahnrädern,
wobei die Prüfvorrichtung eine erste, drehbar gelagerte, von einem Elektromotor (30) angetriebene Welle (32) und zweite, drehbar gelagerte Wellen (31) aufweist,
wobei die erste Welle (32) parallel zu den zweiten Wellen ausgerichtet ist,
wobei die Prüfvorrichtung einen Sensor (40) zur Detektion von Körperschall aufweist,
wobei ein erstes Zahnrad **derart ausgebildet ist, dass es** auf die erste Welle aufsteckbar ist und
**mit der ersten Welle (32)** drehfest verbindbar ist,
wobei ein jeweiliges zweites Zahnrad auf die jeweilige zweite Welle (31) aufsteckbar ist und drehfest mit der jeweiligen zweiten Welle (31) verbindbar ist,
so, dass das erste Zahnrad mit dem jeweiligen zweiten Zahnrad im Eingriff ist,
**dadurch gekennzeichnet, dass**
**eine Grundplatte (1) der Prüfvorrichtung als Lageraufnahme für Lager fungiert oder mit einer jeweiligen Lageraufnahme für jeweilige Lager verbunden ist,**
**wobei die jeweiligen Lager die jeweiligen Wellen lagern,**
**wobei jedes Wellenteil (5) oder jede Welle (31) jeweils einen Tag, insbesondere einen RFID-Tag oder einen NFC-Tag, aufweist und die Prüfvorrichtung ein Lesegerät aufweist, welches geeignet ausgeführt ist, die innerhalb einer Schutzabdeckung (2) sich befindenden Tags auszulesen, insbesondere zur Erkennung der Wellen oder Wellenteile,**
**wobei das Lesegerät mit einem Rechner verbunden ist, der geeignet ausgeführt ist, den Verlauf des Sensorsignals in Abhängigkeit von einem zeitlichen Verlauf der Drehzahl der ersten Welle (32) auf ein unzulässig hohes Maß an Abweichung von einem Sollverlauf zu überwachen.**

2. Prüfvorrichtung nach Anspruch 1,
**dadurch gekennzeichnet, dass**
von einer jeweiligen Belastungseinrichtung einer jeweiligen zweiten Welle (31) ein Bremsmoment zuleitbar ist, dessen Wert mittels einer Winkelstellung eines Hebelteils (4) der Prüfvorrichtung einstellbar ist.

3. Prüfvorrichtung nach einem der Ansprüche 1 oder 2,
**dadurch gekennzeichnet, dass**
eine Grundplatte (1) der Prüfvorrichtung als Lageraufnahme für Lager fungiert oder mit einer jeweiligen Lageraufnahme für jeweilige Lager verbunden ist,
wobei die jeweiligen Lager die jeweiligen Wellen lagern.

4. Prüfvorrichtung nach einem der vorangegangenen Ansprüche,
**dadurch gekennzeichnet, dass**
eine vorzugsweise optisch transparente Schutzabdeckung (2) zusammen mit der Grundplatte (1) die Wellen und den Sensor (40) ein schalldichtes Gehäuse bildend umgeben.

5. Prüfvorrichtung nach einem der vorangegangenen Ansprüche,
**dadurch gekennzeichnet, dass**
der Sensor (40) an einer Lageraufnahme eines Lagers und/oder an einem Außenring eines Lagers der ersten Welle (32) angebracht ist, insbesondere und/oder diese berührt.

6. Prüfvorrichtung nach einem der vorangegangenen Ansprüche,
**dadurch gekennzeichnet, dass**
der Sensor (40) mit einer Auswerteeinheit der Prüfvorrichtung elektrisch verbunden ist, welche eingerichtet zum Bestimmen eines Wertes eines Schallpegels oder einer Kurtosis des fouriertransformierten Sensorsignals, insbesondere des den vom Sensor (40) detektierten Körperschall darstellenden Sensorsignals, ist und zum Überwachen des Wertes oder der Kurtosis auf Überschreitung eines Schwellwerts.

7. Prüfvorrichtung nach einem der vorangegangenen Ansprüche,
**dadurch gekennzeichnet, dass**
die erste Welle (32) eine Ausnehmung, insbesondere eine sacklochartige Ausnehmung, aufweist, wobei in die Ausnehmung ein erster axialer Bereich eines ersten Wellenteils (5) einsteckbar ist und drehfest verbindbar ist mit der ersten Welle (32) und ein erstes Zahnrad auf einen zweiten axialen Bereich des Wellenteils (5) aufsteckbar und drehfest verbindbar ist,
wobei die jeweilige zweite Welle (31) eine jeweilige Ausnehmung, insbesondere eine jeweilige sacklochartige Ausnehmung, aufweist, wobei in die jeweilige Ausnehmung ein erster axialer Bereich eines jeweiligen zweiten Wellenteils (5) einsteckbar ist und drehfest verbindbar ist mit der jeweiligen zweiten Welle (31) und ein jeweiliges zweites Zahnrad auf einen zweiten axialen Bereich des jeweiligen zweiten Wellenteils (5) aufsteckbar und drehfest verbindbar ist,
so, dass das erste Zahnrad mit dem jeweiligen zweiten Zahnrad im Eingriff ist.

8. Prüfvorrichtung nach einem der vorangegangenen Ansprüche,
**dadurch gekennzeichnet, dass**
jedes Wellenteil (5) und jede Welle (31) jeweils einen Tag, insbesondere einen RFID-Tag oder einen NFC-Tag, aufweist und die Prüfvorrichtung ein Lesegerät aufweist, welches die innerhalb der Schutzabdeckung (2) sich befindenden Tags ausliest, insbesondere zur Erkennung der Wellen und Wellenteile,
wobei das Lesegerät mit einem Rechner verbunden ist, der geeignet ist, den Verlauf des Sensorsignals in Abhängigkeit von einem zeitlichen Verlauf der Drehzahl der ersten Welle (32) auf ein unzulässig hohes Maß an Abweichung von einem Sollverlauf zu überwachen.

9. Prüfvorrichtung nach einem der vorangegangenen Ansprüche,
**dadurch gekennzeichnet, dass**
die Grundplatte (1) aus einem schallabsorbierenden Material gefertigt ist,
insbesondere wobei das Material ein Schaumstoff ist und/oder einen Volumenanteil von Wolle, insbesondere Mineralwolle oder Baumwolle, aufweist, der größer als 10 % beträgt.

## Claims

1. A testing apparatus for testing gear wheels,
wherein the testing apparatus has a first rotatably mounted shaft (32) driven by an electric motor (30), and second rotatably mounted shafts (31),
wherein the first shaft (32) is oriented parallel to the second shafts,
wherein the testing apparatus has a sensor (40) for detecting structure-borne noise,
wherein a first gear wheel is formed such that it can be mounted on the first shaft and can be connected non-rotatably to the first shaft (32),
wherein a respective second gear wheel can be mounted on the respective second shaft (31) and can be connected non-rotatably to the respective second shaft (31),
such that the first gear wheel meshes with the respective second gear wheel,
**characterised in that**
a base plate (1) of the testing apparatus acts as a bearing receptacle for bearings or is connected to a respective bearing receptacle for respective bearings,
with the respective bearings forming a mount for the respective shafts,
with each shaft part (5) or each shaft (31) having in each case a tag, in particular an RFID tag or an NFC tag, and the testing apparatus having a reader which is embodied suitably to read the tag which is located within a protective cover (2), in particular in order to identify the shafts or shaft parts,
with the reader being connected to a computer which is embodied suitably to monitor the profile of the sensor signal as a function of a time characteristic of the speed of rotation of the first shaft (32) for an impermissibly high amount of deviation from a target profile.

2. A testing apparatus according to claim 1,
**characterised in that**
a braking torque can be supplied from a respective loading device to a respective second shaft (31), the value of which braking torque can be set by means of an angular position of a lever part (4) of the testing apparatus.

3. A testing apparatus according to one of claims 1 or 2,
**characterised in that**
a base plate (1) of the testing apparatus acts as a bearing receptacle for bearings or is connected to a respective bearing receptacle for respective bearings,
with the respective bearings forming a mount for the respective shafts.

4. A testing apparatus according to one of the preceding claims,
**characterised in that**
a preferably optically transparent protective cover (2) together with the base plate (1) surrounds the shafts and the sensor (40), forming a soundproof housing.

5. A testing apparatus according to one of the preceding claims,
**characterised in that**
the sensor (40) is attached to a bearing receptacle of a bearing and/or to an outer ring of a bearing of the first shaft (32), in particular and/or touches them.

6. A testing apparatus according to one of the preceding claims,
**characterised in that**
the sensor (40) is electrically connected to an evaluation unit of the testing apparatus which is set up to determine a value of a sound level or of a kurtosis of the Fourier-transformed sensor signal, in particular of the sensor signal which represents the structure-borne noise detected by the sensor (40), and to monitor the value or the kurtosis for exceeding a threshold value.

7. A testing apparatus according to one of the preceding claims,
**characterised in that**
the first shaft (32) has a cutout, in particular a blind-hole-like cutout, with a first axial region of a first shaft part (5) being able to be inserted into the cutout and being able to be connected non-rotatably to the first shaft (32), and a first gear wheel being able to be mounted on a second axial region of the shaft part (5) and being able to be connected non-rotatably,
with the respective second shaft (31) having a respective cutout, in particular a respective blind-hole-like cutout, with a first axial region of a respective second shaft part (5) being able to be inserted into the respective cutout and being able to be connected non-rotatably to the respective second shaft (31), and a respective second gear wheel being able to be mounted on a second axial region of the respective second shaft part (5) and being able to be connected non-rotatably,
such that the first gear wheel meshes with the respective second gear wheel.

8. A testing apparatus according to one of the preceding claims,
**characterised in that**
each shaft part (5) and each shaft (31) has in each case a tag, in particular an RFID tag or an NFC tag, and the testing apparatus has a reader which reads the tag which is located within the protective cover (2), in particular in order to identify the shafts and shaft parts,
with the reader being connected to a computer which is suitable for monitoring the profile of the sensor signal as a function of a time characteristic of the speed of rotation of the first shaft (32) for an impermissibly high amount of deviation from a target profile.

9. A testing apparatus according to one of the preceding claims,
**characterised in that**
the base plate (1) is manufactured from a sound-absorbing material,
in particular with the material being a foam material and/or having a volume percent of wool, in particular mineral wool or cotton, which is greater than 10%.

## Revendications

1. Dispositif de test permettant de tester des roues dentées,
le dispositif de test présentant un premier arbre (32) monté rotatif et entraîné par un moteur électrique (30), et des seconds arbres (31) montés rotatifs,
le premier arbre (32) étant orienté parallèlement aux seconds arbres,
le dispositif de test présentant un capteur (40) permettant de détecter des bruits de structure,
une première roue dentée étant réalisée de manière à pouvoir être enfichée sur le premier arbre et à pouvoir être reliée de manière solidaire en rotation au premier arbre (32),
une seconde roue dentée respective pouvant être enfichée sur le second arbre (31) respectif et pouvant être reliée de manière solidaire en rotation au second arbre (31) respectif,
de sorte que la première roue dentée est en prise avec la seconde roue dentée respective,
**caractérisé en ce que**
une plaque de base (1) du dispositif de test sert de logement de palier pour des paliers ou est reliée à un logement de palier respectif destiné à un palier respectif,
les paliers respectifs accueillant sur palier les arbres respectifs,
chaque partie d'arbre (5) ou chaque arbre (31) présentant respectivement une étiquette, en particulier une étiquette RFID ou une étiquette NFC, et le dispositif de test présentant un appareil de lecture conçu de manière appropriée pour lire les étiquettes se trouvant à l'intérieur d'un couvercle de protection (2), en particulier en vue d'une détection des arbres ou des parties d'arbre,
l'appareil de lecture étant connecté à un ordinateur qui est conçu de manière appropriée pour surveiller la courbe du signal de capteur en fonction d'une courbe temporelle de la vitesse de rotation du premier arbre (32) pour un degré d'écart inacceptablement élevé par rapport à une courbe de consigne.

2. Dispositif de test selon la revendication 1,
**caractérisé en ce que**
un couple de freinage, dont la valeur peut être ajustée au moyen d'une position angulaire d'une partie levier (4) du dispositif de test, peut être transmis par un dispositif de charge respectif à un second arbre (31) respectif.

3. Dispositif de test selon l'une quelconque des revendications 1 ou 2,
**caractérisé en ce que**
une plaque de base (1) du dispositif de test sert de logement de palier pour des paliers ou est reliée à un logement de palier respectif destiné à un palier respectif,
les paliers respectifs accueillant sur palier les arbres respectifs.

4. Dispositif de test selon l'une quelconque des revendications précédentes,
**caractérisé en ce que**
un couvercle de protection (2) de manière préférée optiquement transparent, ainsi que la plaque de base (1), entourant les arbres et le capteur (40) en formant un boîtier insonorisé.

5. Dispositif de test selon l'une quelconque des revendications précédentes,
**caractérisé en ce que**
le capteur (40) est mis en place au niveau d'un logement de palier d'un palier et/ou au niveau d'une bague extérieure d'un palier du premier arbre (32), et/ou est en particulier en contact avec ledit logement de palier ou ladite bague extérieure.

6. Dispositif de test selon l'une quelconque des revendications précédentes,
**caractérisé en ce que**
le capteur (40) est connecté électriquement à une unité d'évaluation du dispositif de test qui est conçue pour déterminer une valeur d'un niveau sonore ou d'un kurtosis du signal de capteur soumis à une transformée de Fourier, en particulier du signal de capteur représentant le bruit de structure détecté par le capteur (40), et pour surveiller la valeur ou le kurtosis quant à un dépassement d'une valeur de seuil.

7. Dispositif de test selon l'une quelconque des revendications précédentes,
**caractérisé en ce que**
le premier arbre (32) présente un évidement, en particulier un évidement de type trou borgne, une première région axiale d'une première partie d'arbre (5) pouvant être insérée dans l'évidement et pouvant être reliée de manière solidaire en rotation au premier arbre (32), et une première roue dentée pouvant être enfichée, et reliée de manière solidaire en rotation, sur une seconde région axiale de la partie d'arbre (5), le second arbre (31) respectif présentant un évidement respectif, en particulier un évidement de type trou borgne respectif, une première région axiale d'une seconde partie d'arbre (5) respective pouvant être insérée dans l'évidement respectif et pouvant être reliée de manière solidaire en rotation au second arbre (31) respectif, et une seconde roue dentée respective pouvant être enfichée, et reliée de manière solidaire en rotation, sur une seconde région axiale de la seconde partie d'arbre (5) respective, de sorte que la première roue dentée est en prise avec la seconde roue dentée respective,

8. Dispositif de test selon l'une quelconque des revendications précédentes,
**caractérisé en ce que**
chaque partie d'arbre (5) et chaque arbre (31) présentent respectivement une étiquette, en particulier une étiquette RFID ou une étiquette NFC, et le dispositif de test présente un appareil de lecture qui lit les étiquettes se trouvant à l'intérieur du couvercle de protection (2), en particulier en vue d'une détection des arbres et des parties d'arbre,
l'appareil de lecture étant connecté à un ordinateur qui est approprié pour surveiller la courbe du signal de capteur en fonction d'une courbe temporelle de la vitesse de rotation du premier arbre (32) pour un degré d'écart inacceptablement élevé par rapport à une courbe de consigne.

9. Dispositif de test selon l'une quelconque des revendications précédentes,
**caractérisé en ce que**
la plaque de base (1) est réalisée en un matériau insonorisant,
le matériau étant en particulier une mousse et/ou présentant une proportion volumique de laine, en particulier de laine minérale ou de coton, qui est supérieure à 10 %.
